# FASCICULE DE BREVET EUROPEEN

(11) **EP 0 768 959 B1**
(45) Date de publication et mention de la délivrance du brevet: **11.11.1998**
(21) Numéro de dépôt: 95924925.1
(22) Date de dépôt: 23.06.1995
(51) Int. Cl.: B60C 11/12

(54) **BANDE DE ROULEMENT POUR PNEUMATIQUES HIVERNAUX**
LAUFFLÄCHE FÜR WINTERREIFEN
WINTER TYRE TREAD

(30) Priorité: 05.07.1994 FR 9408378
(43) Date de publication de la demande: 23.04.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: LAGNIER, Alain, F-63540 Romagnat (FR)
(74) Mandataire: Devaux, Edmond-Yves
(86) Numéro de dépôt international: EP9502456
(87) Numéro de publication internationale: WO9601190

(56) Documents cités:
- EP-A- 0 125 437
- EP-A- 0 131 246
- EP-A- 0 282 765
- EP-A- 0 378 090
- EP-A- 0 515 349
- EP-A- 0 564 435
- DE-A- 4 107 547
- PATENT ABSTRACTS OF JAPAN vol. 16, no. 87 (M-1217) 3 Mars 1992 & JP,A,03 271 007 (TOYO TIRE&RUBBER CO. LTD.) 3 Décembre 1991

## Description

L'invention concerne la bande de roulement d'un pneumatique routier, doté préférentiellement d'une armature de carcasse radiale et d'une armature de sommet, et plus particulièrement destiné à des roulages sur sols enneigés, verglacés ou mouillés.

Une telle bande de roulement est généralement formée d'éléments en relief (nervures ou blocs) séparés les uns des autres dans le sens circonférentiel et/ou dans le sens transversal par des rainures transversales et/ou circonférentielles et pourvus de nombreuses incisions ou fentes, dont la largeur non nulle est très inférieure à la largeur desdites rainures circonférentielles et transversales. La largeur d'une incision est généralement variable en fonction de la dimension du pneumatique étudié, mais généralement comprise entre 0,1 mm et 2 mm.

De nombreux types de fentes ou incisions ont été proposés en vue d'améliorer l'adhérence du pneumatique sur les sols considérés. Comme connues, lesdites incisions peuvent être normales à la surface de la bande de roulement, ou inclinées par rapport à la direction perpendiculaire à la surface de la bande de roulement. En vue de supprimer le sens de roulage, imposé par l'inclinaison des incisions ci-dessus, la demande française No 2 612 129 décrit une bande de roulement comportant des blocs munis d'incisions présentant en section droite sur la totalité de leur profondeur des tracés en lignes brisées et dits "en opposition de phase". Dans le but de remédier à la déchéance de l'adhérence sur les sols considérés en cours de la durée de vie du pneumatique, et de diminuer la vitesse d'usure de la bande de roulement dudit pneumatique, la demande française No 2 641 501 décrit des incisions présentant en section droite des tracés en forme de fourches à au moins deux branches.

Les solutions, décrites dans les demandes citées ci-dessus, permettent d'agir, en cours de la durée de vie du pneumatique, sur la mobilité des lamelles de caoutchouc délimitées par deux incisions adjacentes et/ou sur le nombre d'arêtes entrant en contact avec le sol considéré. On obtient ainsi un bon compromis des propriétés adhérence-vitesse d'usure, quel que soit le degré d'usure du pneumatique.

La présente invention a pour objet d'obtenir sensiblement le même compromis adhérence-usure par une autre configuration d'incisions, en permettant en outre d'agir sur l'orientation moyenne des axes selon lesquels s'exercent les rigidités maximale et minimale des lamelles de caoutchouc situées entre incisions, pour une certaine partie de la profondeur des incisions, ce qui permet de prendre en compte d 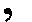 autres propriétés du pneumatique en fonction de la profondeur d 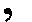 incisions et du degré d 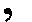 usure du pneumatique..

C'est ainsi que la bande de roulement pour pneumatique, conforme à l'invention, dont au moins certains éléments en relief sont pourvus d'incisions, chaque incision présentant, sur la surface de la bande de roulement, un tracé de largeur non nulle et d'axe moyen faisant avec la direction circonférentielle du pneumatique un angle donné, et au moins certaines incisions ayant chacune, au moins sur toute surface parallèle à la surface de bande de roulement et située à une distance radiale de ladite surface, au moins égale à la moitié de la profondeur maximale de l'incision, un (des) tracé(s) dont l'(les) orientation(s) de l'(des) axe(s) moyen(s) est (sont) différente(s) de l'orientation de l'axe moyen du tracé de ladite incision sur la surface de bande de roulement, la différence β_{D} en valeur absolue, égale à |α₀ -α₁ |, étant nulle entre la surface de bande de roulement et la surface, parallèle à la surface de bande de roulement et située à une distance radiale h₁ de ladite surface, et ensuite proportionnelle à la distance radiale séparant la surface, où l'on mesure ladite différence, de la surface située à la profondeur h₁.

Les incisions, que l'on trouve sur les blocs et/ou sur les nervures d'une bande de roulement, sont généralement de deux types. Les incisions du premier type sont des incisions dont les tracés sur la surface de bande de roulement ou sur une surface parallèle à ladite surface possèdent deux extrémités entre lesquelles le tracé de l'incision peut avoir une configuration quelconque. Pour ce type d'incision, l'axe moyen du tracé de l'incision sur la surface de bande de roulement ou sur toute surface parallèle à ladite surface est, par convention, le segment de droite joignant les deux extrémités dudit tracé. Les incisions du deuxième type sont des incisions dont les tracés, sur la surface de bande de roulement ou une surface parallèle a ladite surface, sont des figures géométriques fermées. Pour ce deuxième type d'incision, l'axe moyen du tracé sur la surface de bande de roulement ou sur toute autre surface parallèle à ladite surface est, par convention, un axe principal d'inertie de l'aire de ladite figure géométrique. L'orientation de l'axe moyen du tracé correspond alors à l'inclinaison dudit axe par rapport à l'axe de référence qui est choisi comme étant la trace du plan équatorial du pneumatique sur la surface de bande de roulement, inclinaison qui se mesure donc par un angle.

L'axe moyen du trace d'une incision en profondeur ou vu en section droite est, de même et par convention, le segment de droite joignant les deux extrémités dudit tracé dans le sens de la profondeur.

Le tracé d'une incision sur une surface parallèle à la surface de bande de roulement est dans la plupart des cas identique au tracé de ladite incision sur la surface de bande de roulement, quelle que soit la profondeur à laquelle est située la surface parallèle à la surface de bande de roulement, sur laquelle il est disposé. L'invention s'applique avantageusement aussi bien au tracé ci-dessus qu'à un tracé d'incision dimensionnellement variable en fonction de ladite profondeur, comme par exemple décrit dans la demande française No 2 544 251 où le tracé de l'incision, ondulé ou en zigzag sur la surface de bande de roulement, a une amplitude qui décroît en fonction de la profondeur, ou encore, comme décrit dans la demande française No 641 501, citée ci-dessus, le tracé de l'incision se multipliant par deux, trois ou plus en fonction de la profondeur de l'incision, et l'axe moyen du tracé de cette incision en profondeur étant lui-même subdivisé en deux axes moyens ou plus.

De manière préférentielle, et pour ne pas rendre les inserts métalliques du moule, destinés à créer les incisions, trop fragiles, la différence en valeur absolue, entre l'angle que fait l'axe moyen du tracé de l'incision sur la surface de la bande de roulement avec la direction circonférentielle du pneumatique, et l'angle, avec ladite direction, de l'(des) axe(s) moyen(s) du (des) tracé(s) de l'incision sur la surface parallèle à la surface de roulement et séparée radialement à l'intérieur de ladite surface d'une distance au moins égale à la moitié de la profondeur maximale de l'incision, est au plus égale à 45°.

Dans le cas d'une incision ayant sur la surface de bande de roulement un tracé de forme quelconque, mais de préférence ondulé ou dit en zigzag et ayant un tracé rectiligne et perpendiculaire à la surface de roulement dans le sens de la profondeur, la différence de tracés ci-dessus peut correspondre géométriquement à une translation du tracé de l'incision sur la bande de roulement le long d'un segment de droite perpendiculaire à la surface de roulement, sur la distance radiale h₁ mesurée à partir de la surface de roulement, puis à une translation le long du même segment de droite pour la distance radiale restante, accompagnée d'une rotation du même tracé parallèlement à la surface de roulement, ledit segment de droite étant l 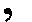 axe moyen du tracé de l 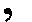 incision en profondeur.

L'angle global de rotation est alors égal à la différence des orientations respectivement sur la surface de bande de roulement et sur la surface parallèle à ladite surface et à la profondeur de l'incision. Il en est de même quel que soit le tracé de l'incision en profondeur, perpendiculaire à la surface de bande de roulement ou incliné, ondulé ou en zigzag avec inclinaison ou pas, avec branches ou pas, ou tout autre, la différence d'angle mentionnée ci-dessus pouvant de même être obtenue par une translation du tracé de l'incision sur la surface de bande de roulement accompagnée d'une rotation parallèle à la surface de roulement, puis d 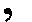 une translation accompagnée d 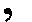 une rotation parallèle à la surface de roulement.

La rotation est régulière, la variation de l'angle étant proportionnelle à la profondeur parcourue.

L'invention sera mieux comprise à l'aide du dessin annexé à la description, illustrant des exemples non limitatifs d'exécution d'une bande de roulement conforme à l'invention, dessin sur lequel,
- la figure 1 montre schématiquement un élément en relief de bande de roulement, comprenant au moins une incision selon une première variante de l'invention,
- la figure 2 montre schématiquement un élément en relief de bande de roulement, comprenant au moins une incision selon une deuxième variante de l'invention,
- la figure 3 montre schématiquement une autre forme d'incision conforme à l'invention.
- la figure 4 montre schématiquement une variante d'incision à tracé dit "fermé" sur la surface de bande de roulement et sur toute surface parallèle à ladite surface.

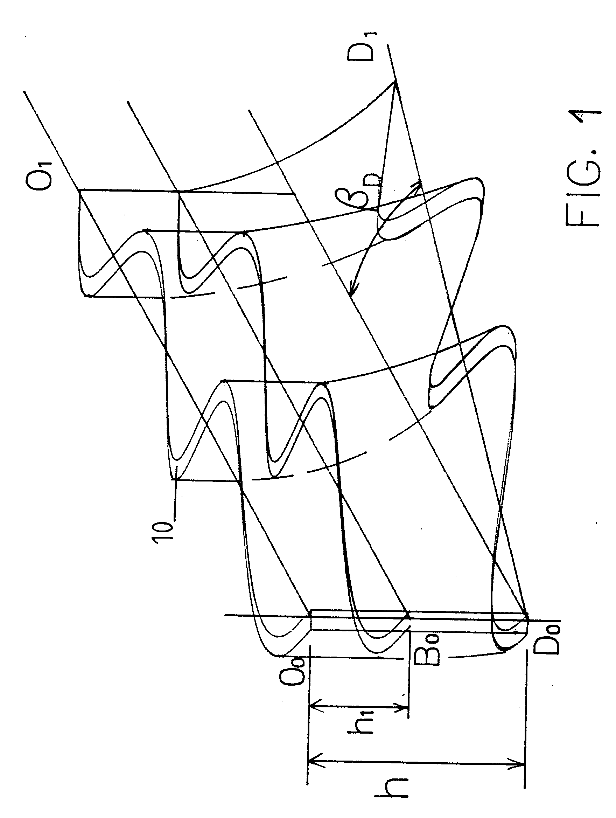

L'élément en relief ou bloc (1) de la bande de roulement, d'un pneumatique de dimension 185/65.R.15 X est délimité dans le sens transversal par des rainures circonférentielles (2) et dans le sens circonférentiel par des rainures quasi-transversales (3). Ledit bloc (1) est pourvu de plusieurs incisions (10), débouchant par une de leurs extrémités sur les rainures circonférentielles et dont les tracés sur la surface de bande de roulement sont sensiblement parallèles entre eux et sensiblement parallèles à la direction des rainures quasi-transversales (3). Pour plus de clarté de la figure 1 et une meilleure compréhension, la seule incision (10) montrée présente sur la surface de bande de roulement un tracé dit "ondulé", l'amplitude et la longueur d'onde de ladite ondulation étant constantes sur toute la longueur de l'incision. L'axe moyen du tracé sur la surface de bande de roulement est la droite O₀O₁ joignant les deux extrémités O₀ et O₁ du tracé sur ladite surface. Quant à l'axe moyen O₀D₀ du tracé dans le sens de la profondeur, tracé rectiligne et perpendiculaire à la surface de bande de roulement, il est confondu avec le tracé lui-même.

Sur une surface parallèle à la surface de bande de roulement et correspondant à une profondeur h₁, distance radiale séparant l'extrémité O₀ du point B₀ de l'axe moyen O₀D₀, l'incision (10) a exactement la même configuration que sur la surface de bande de roulement, son tracé B₀B₁ se déduisant du tracé O₀O₁ par une simple translation de vecteur O₀B₀. Par contre, de la surface parallèle à la surface de bande de roulement et à la profondeur h₁ à la surface correspondant à la profondeur totale h, l'axe moyen B₀B₁ du tracé subit une rotation d'angle β_{D} pour obtenir le nouvel axe moyen D₀D₁, la configuration de l'incision (10) restant en tous points identique à la configuration du tracé sur la surface de bande de roulement. La profondeur h₁ est, par exemple, inférieure à la moitié de la profondeur totale h de l'incision. Une telle configuration est particulièrement intéressante lorsque l'orientation des incisions est, sur la surface de bande de roulement, choisie initialement pour l'amélioration d'une propriété donnée du pneumatique et que cette propriété doit être si possible conservée pendant un certain temps : à titre d'exemple, une orientation initiale oblique est préférable pour une émission de bruit faible, cette orientation deviendra à partir d'une certaine profondeur h₁ variable en fonction de la profondeur de manière à avoir à la profondeur h une orientation sensiblement perpendiculaire à la direction circonférentielle.

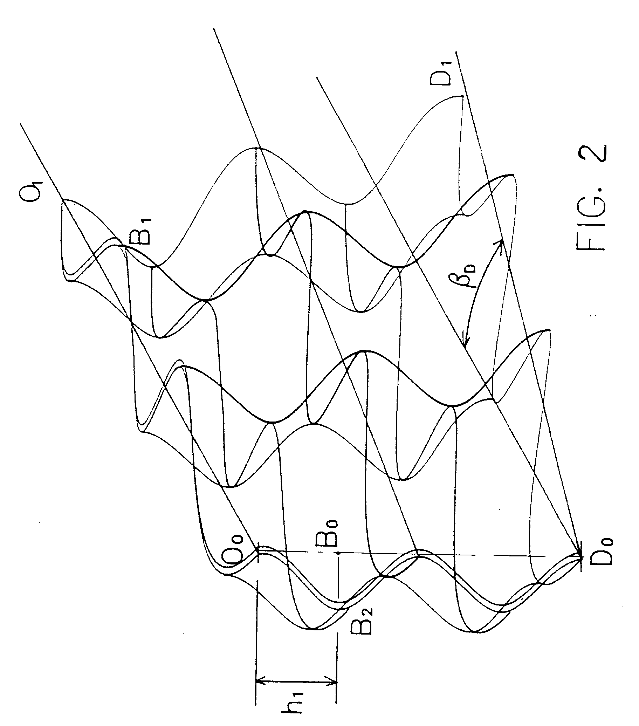

Toute incision, quelle que soit sa configuration géométrique initiale dans l'espace, peut être transformée en une incision conforme à l'invention. L'incision, montrée sur la figure 2, est une incision (10), dont le tracé O₀O₁ sur la surface de bande de roulement est ondulé, l'axe moyen dudit tracé étant le segment de droite O₀O₁. Ladite incision (10) possède aussi, à l'une de ses extrémités, et dans le sens de la profondeur un tracé O₀D₀ ondulé, la profondeur étant égale à h. Sur une surface parallèle à la surface de bande de roulement et correspondant à une profondeur h₁, distance radiale séparant l'extrémité O₀ du point B₀ de l'axe moyen O₀D₀, et inférieure à la moitié de la profondeur totale h, l'incision (10) a exactement la même configuration que sur la surface de bande de roulement, son tracé B₀B₁ se déduisant du tracé O₀O₁ par une simple translation le long de la portion O₀B₂ de tracé correspondant à la profondeur h₁. Comme dans l'exemple précédent, de la surface, parallèle à la surface de bande de roulement et située à la profondeur h₁, à la surface correspondant à la profondeur totale h, l'axe moyen B₀B₁ du tracé subit une rotation d'angle β_{D} pour obtenir le nouvel axe moyen D₀D₁, la configuration de l'incision (10) restant en tous points identique à la configuration du tracé sur la surface de bande de roulement et la variation de l'angle de rotation β étant proportionnelle à la distance radiale. La profondeur h₁ est, dans l'exemple montré, égale à une demi-longueur d'onde du tracé en profondeur.

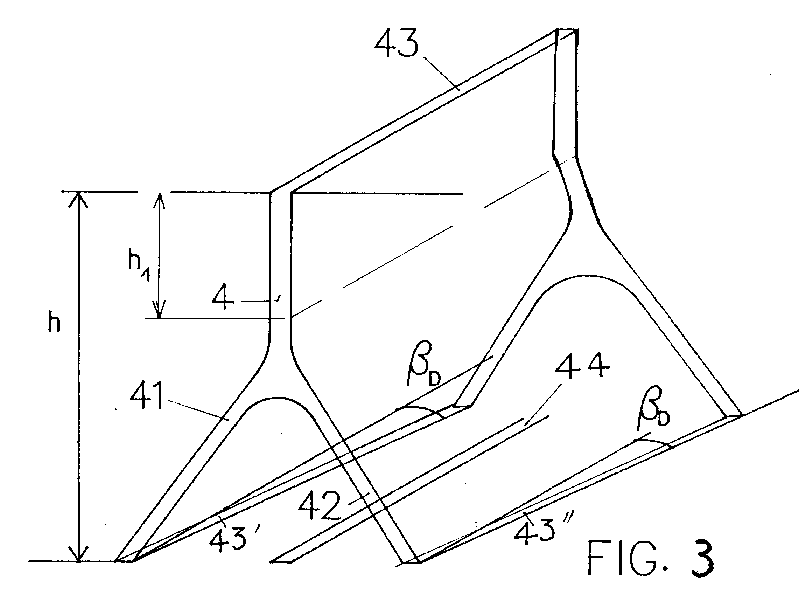

Sur la figure 3 est montrée une autre variante d'incision conforme à l'invention et obtenue par transformation d'une incision dite à "branches". L'incision montrée est une incision présentant, vue en section droite perpendiculairement à la surface de bande de roulement, un tracé (4), rectiligne jusqu'à une certaine profondeur, pour se subdiviser ensuite en deux branches (41) et (42), et sur la surface de bande de roulement un tracé rectiligne (43). Sur la surface parallèle à la surface de bande roulement, correspondant à la profondeur h₁ de l'incision, le tracé rectiligne (43) reste identique à lui-même, et se déduit du tracé sur la surface de bande de roulement par une simple translation de profondeur h₁. Par contre à la profondeur globale h de l 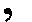 incision, existent deux tracés (43') et (43'') ayant la même configuration géométrique que le tracé (43) de la surface de bande de roulement, mais faisant avec la projection orthogonale (44) dudit tracé (43) sur ladite surface parallèle à la surface de bande roulement un angle β_{D}, égal dans l'exemple décrit à 30°.

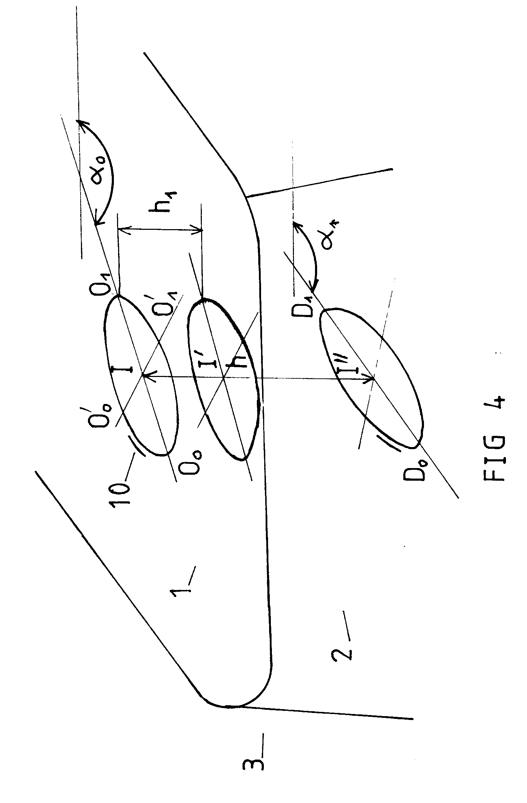

Sur la figure 4, l'élément en relief ou bloc (1) de la bande de roulement comprend des incisions (10) (une seule est montrée pour plus de clarté de la figure) à tracé elliptique sur la surface de bande de roulement. Ce tracé possède deux axes : un grand axe O₀O₁ et un petit axe O'₀O'₁. Le grand axe de l'ellipse fait avec la direction circonférentielle un angle α ₀. Si l'on considère le point d'intersection I des deux axes de l'ellipse, et sa projection I' perpendiculairement à la surface de bande de roulement, la distance I-I' mesure la profondeur h₁ de l'incision, distance radiale entre la surface de bande de roulement et le plan parallèle à ladite surface sur lequel le tracé de l 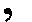 incision est identique à celui existant sur la surface de bande de roulement. De cette profondeur h1 à la profondeur globale h (I-I ''/de l 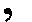 incision, la translation le long de l 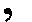 axe I 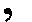 I'' s 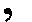 accompagne d 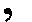 une rotation de sorte que, sur la surface parallèle à la surface de bande de roulement et située à la distance h de ladite surface, l'incision (10) présente un tracé elliptique, dont le grand axe D₀D₁ fait avec la direction circonférentielle un angle α₁, différent de α₀.

Si l'on considère la longueur du tracé de l'incision sur la surface parallèle à la bande de roulement, on ne sort pas du cadre de l'invention si cette longueur est inférieure, égale, ou supérieure à la longueur du tracé de ladite incision sur la surface de bande de roulement. De même, la profondeur de l'incision peut être variable en fonction de sa longueur.

## Revendications

1. Bande de roulement pour pneumatique, conforme à l'invention, dont au moins certains éléments en relief (1) sont pourvus d'incisions (10), chaque incision (10) présentant, sur la surface de la bande de roulement, un tracé de largeur non nulle et d'axe moyen faisant avec la direction circonférentielle du pneumatique un angle α₀ donné, et au moins certaines incisions (10) ayant chacune, sur une surface parallèle à la surface de bande de roulement et située à une distance radiale de ladite surface, au moins égale à la moitié de la profondeur maximale de l'incision, un (des) tracé(s) dont l'(les) orientation(s) α₁ de l'(des) axe(s) moyen(s) est (sont) différente(s) de l'orientation α₀ de l'axe moyen du tracé de ladite incision sur la surface de bande de roulement, la différence β_{D} en valeur absolue, égale à |α₀ -α₁ |, étant nulle entre la surface de bande de roulement et la surface, parallèle à la surface de bande de roulement et située à une distance radiale h₁ de ladite surface, et ensuite proportionnelle à la distance radiale séparant la surface, où l'on mesure ladite différence, de la surface située à la profondeur h₁.

2. Bande de roulement selon la revendication 1, caractérisée en ce qu'elle comprend au moins des incisions (10) présentant sur la surface de bande de roulement et sur toute surface parallèle à ladite surface des tracés ondulés ou en zigzag.

3. Bande de roulement selon la revendication 1, caractérisée en ce qu'elle comprend au moins des incisions présentant dans le sens de la profondeur des tracés ondulés ou en zigzag.

4. Bande de roulement selon la revendication 1, caractérisée en ce qu'elle comprend au moins des incisions présentant, d'une part sur la surface de bande de roulement et sur toute surface parallèle à ladite surface, d'autre part en profondeur, des tracés ondulés ou zigzag.

5. Bande de roulement selon la revendication 1, caractérisée en ce qu'elle comprend au moins des incisions (10) présentant dans le sens de leur profondeur des tracés (4) se subdivisant à partir d'une certaine profondeur en au moins deux branches (41, 42).

## Claims

1. A tread for a tyre, according to the invention, at least some of the elements in relief (1) of which are provided with incisions (10), each incision (10) having, on the surface of the tread, a trace of a width other than zero and of median axis forming a given angle α₀ with the circumferential direction of the tyre, and at least some incisions (10) each having, on a surface parallel to the tread surface and located at a radial distance from said surface, at least equal to half the maximum depth of the incision, one or more trace(s) of which the orientation(s) α₁ of the median axis (axes) of which is (are) different from the orientation α₀ of the median axis of the trace of said incision on the tread surface, the difference β_{D} in absolute value, equal to |α₀-α₁|, being zero between the tread surface and the surface parallel to the tread surface and located at a radial distance h₁ from said surface, and then proportional to the radial distance between the surface where said difference is measured and the surface located at the depth h₁.

2. A tread according to Claim 1, characterised in that it comprises at least several incisions (10) having undulating or zigzag traces on the tread surface and on any surface parallel to said surface.

3. A tread according to Claim 1, characterised in that it comprises at least several incisions having undulating or zigzag traces in the direction of the depth.

4. A tread according to Claim 1, characterised in that it comprises at least several incisions having undulating or zigzag traces, firstly on the tread surface and on any surface parallel to said surface and secondly in depth.

5. A tread according to Claim 1, characterised in that it comprises at least several incisions (10) having in the direction of their depth traces (4) which are subdivided into at least two branches (41, 42) starting from a certain depth.

## Patentansprüche

1. Lauffläche für einen Reifen gemäß der Erfindung, bei dem mindestens bestimmte reliefartige Elemente (1) mit Einschnitten (10) versehen sind, wobei jeder Einschnitt (10) auf der Oberfläche der Lauffläche eine Spur mit einer Breite darbietet, die nicht Null ist, und mit einer mittleren Achse, die zur Umfangsrichtung des Reifens einen vorgegebenen Winkel α₀ bildet, und mindestens bestimmten Einschnitten (10), die jeweils auf einer Oberfläche parallel zur Oberfläche der Lauffläche und unter einem radialen Abstand von der genannten Oberfläche gelegen sind, der mindestens gleich ist der Hälfte der maximalen Tiefe des Einschnittes, wobei bei einer oder mehreren Spur(en) die Ausrichtung(en) α₁ der Mittelachse(n) unterschiedlich ist bzw. sind gegenüber der Ausrichtung α₀ der Mittelachse der Spur des genannten Einschnitts an der Oberfläche der Lauffläche, so daß die Differenz β_{D} im Absolutwert, die gleich ist |α₀-α₁|, zwischen der Oberfläche der Lauffläche und der Oberfläche Null ist, die parallel ist zur Oberfläche der Lauffläche und unter einer radialen Differenz h₁ von der genannten Oberfläche gelegen ist, und dann proportional zum radialen Abstand ist, der die Oberfläche, bei der man die genannte Differenz mißt, von der Oberfläche trennt, die in der Tiefe h₁ gelegen ist.

2. Lauffläche nach Anspruch 1, dadurch gekennzeichnet, daß sie mindestens Einschnitte (10) aufweist, die auf der Oberfläche der Lauffläche und auf jeder Oberfläche parallel zur genannten Oberfläche gewellte oder zickzackförmige Spuren aufweist.

3. Lauffläche nach Anspruch 1, dadurch gekennzeichnet, daß sie mindestens Einschnitte aufweist, die in Richtung der Tiefe gewellte oder zickzackförmige Spuren aufweist.

4. Lauffläche nach Anspruch 1, dadurch gekennzeichnet, daß sie mindestens Einschnitte aufweist, die einerseits auf der Oberfläche der Lauffläche und auf jeder Oberfläche parallel zur genannten Oberfläche, andererseits in der Tiefe, gewellte oder zickzackförmige Spuren aufweist.

5. Lauffläche nach Anspruch 1, dadurch gekennzeichnet, daß sie mindestens Einschnitte (10) aufweist, die in Richtung ihrer Tiefe Spuren (4) aufweisen, die sich, von einer bestimmten Tiefe ausgehend, zumindestens in zwei Arme (41, 42) unterteilen.
